# EUROPEAN PATENT APPLICATION

(11) **EP 4 245 142 A1**
(43) Date of publication of application: **20.09.2023**
(21) Application number: 22382250.3
(22) Date of filing: 16.03.2022
(51) Int. Cl.: A01N 35/06, A01N 41/04, A01P 21/00

(54) **PROCEDURE FOR THE USE OF MENADIONE FOR THE CONTROL OF A NEW TROPICAL RACE OF FUSARIUM ODORATISSIMUM (TR4) IN PLANTS**

(71) Applicant: Consejo Superior De Investigaciones Científicas (CSIC), 28006 Madrid (ES)
(72) Inventor: Borges Rodríguez, Andrés A., 28006 Madrid (ES); Borges Pérez, Andrés A., 28006 Madrid (ES)
(74) Representative: Pons

(57) **Abstract**

This invention is related to the general subject of the control of pathogens in plants, and in particular to the use of compositions which, when applied to plants, make them more resistant to the attack of said pathogens, particularly to *Fusarium odoratissimum* tropical race 4 (TR4).

## Description

This invention is related to the general subject of the control of pathogens in plants, and in particular to the use of compositions which, when applied to plants, make them more resistant to the attack of said pathogens, particularly to *Fusarium odoratissimum* tropical race 4 (TR4).

### BACKGROUND ART

*Fusarium odoratissimum,* previously known as *Fusarium oxysporum* f. sp. *cubense* (Foc) Tropical Race 4 (TR4), is the causal agent of Fusarium wilt, also known as Panama disease, on Cavendish banana. The Cavendish banana replaced the Gros Michel banana in the middle of the 20^{th} century. Gros Michel was, at that time, the main export banana, but it was susceptible to the soilborne fungus *Fusarium oxysporum* f. sp. *cubense* Race 1 (Foc R1). The Foc R1 resistant Cavendish is since then grown on Foc R1 contaminated soil without any infection in the field. In the last decades of the 20^{th} century, reports suggested that a new strain of *Fusarium oxysporum* f. sp. *cubense*, now commonly known as TR4, started to spread havoc on Cavendish banana plantation in Southeast Asia. In the first years, TR4 spread mainly in Southeast Asia and Australia, but it gradually spread globally. The most recent incursions were reported from Turkey, Mayotte, Colombia and Peru (Aguayo et al. 2020; Garcia-Bastidas et al. 2019; Özarslandan and Akgül 2019). Currently the TR4 infestation is endemic in Southeast Asia and more scattered across the remainder of the world. Notably, the (re-)emergence of Fusarium wilt on banana poses an enormous threat towards local and global banana production. With its ability to destroy the livelihoods of numerous workers in the banana industry as well as threatening the supply of food for consumers, locally or globally, there is a clear need for novel products that aid in reducing or controlling the impact of this disease.

*Fusarium* species are mostly soil-borne plant pathogens with Foc being pathogenic towards *Musa* species. In Foc, originally four pathogenic races were recognized based on their virulence towards banana cultivars, although Race 3 is now not commonly considered as a Foc, as it was found to be pathogenic only on *Heliconia* species. Furthermore, Foc races were divided over vegetative compatibility groups (VCG's). Individuals within the races that can fuse asexually to form a stable heterokaryon belong to one such VCG. Over time at least 21 VCG's have been recognized. Each VCG has an individual pattern of aggressiveness towards an array of banana cultivars. Currently, the most threatening Foc towards *Musa* species is VCG01213/16, also known as TR4. TR4 is just one of several distinct populations of Foc that can attack Cavendish. It is much more aggressive than the so-called subtropical race 4 (STR4) strains that have been reported from Australia, Canary Islands and South Africa. STR4 strains attack Cavendish plants that have been predisposed by cold winter temperatures, soil water saturation, or drought, but are not known to attack Cavendish in the tropics. TR4 does not require predisposing factors to affect Cavendish, and susceptibility to this strain does not change with the physiological status of the host.

TR4 is a soil-borne fungus with strictly asexual reproduction, producing microconidia, macroconidia and chlamydospores as survival structures. It is extremely difficult to manage because the pathogen persists in soil or colonized host tissue by producing chlamydospores with a long survival potential, by growing as hyphae in organic residues, and by invading and surviving as asymptomatic endophytes in a range of non-host plants. In addition, the pathogen can cause disease at low inoculum levels, can reside at some depth in the soil, and the disease can have a long incubation period. At present, there is no practical and effective way of detecting an infected plant until external symptoms are expressed.

The losses caused by the diseases produced in plants by the attack of vascular fungal pathogens are generally significant and, thereof, much research has been made to look for chemical agents capable of controlling this type of diseases.

Menadione is a natural compound, also known as the (pro-) vitamin K3 intermediate in the production of vitamin K. Menadione is thought to be acting as an inducer of plant defences in banana by stimulating the dynamics of accumulation of the 2-hydroxy-9-(p-hydroxyphenyl)-phenalen-1-one, a banana phenalenone-type phytoalexin (Andres A. Borges, Andres Borges-Perez, and Marino Fernandez-Falcon, 2003. J. Agric. Food Chem.) and thereby increasing the resistance to Fusarium wilt caused on Cavendish by a subtropical race STR4 (Fernandez-Falcon et al. 2009. The Open Horticulture Journal).

The literature on the growth regulators of plants based on vitamin K3 and its soluble and low-water soluble derivatives is small. The patent document ES2109865A1 describes the use of compositions which contain menadione, for biostimulation of the metabolism of plants to induce resistance to pathogens and pests. The patent document ES2072209A1 describes compositions for inducing resistance to tracheomicosis in plants, said compositions are comprised of a synergetic mixture of vitamin K3 or at least one of its water soluble derivatives, preferably the menadione sodium bisulfite (MSB) and indol acetic acid (IAA) or at least one of the alkaline salts thereof.

Resistance to TR4, which is mediated by events after pathogen entry into the xylem, is not present in any commercially acceptable banana cultivar. Also, there is no effective chemical agent that can be used to control the disease. Furthermore, so far, there are no references in the literature that relate this specific type of plant growth regulators, Vitamin K3 and its water-soluble and fat-soluble derivatives, with the induction of resistance to the specific tropical race 4 (TR4) of *Fusarium odoratissimum.*

### DESCRIPTION OF THE INVENTION

The present invention avoids the problems caused by the use of toxic fungicides, at the same time as it achieves a significant control of *Fusarium* wilt in plants, particularly in Cavendish banana. The present invention describes the use of an exo-inducer of resistance to *Fusarium odoratissimum* tropical race 4 (TR4), which is systemic, biodegradable, non-toxic and safe from the environmental point of view.

Thus, a first aspect of the present invention relates to the use of a composition, hereinafter "the composition of the invention", comprising at least one of the following active components:
(i) menadione or vitamin K3;
(ii) a water-soluble derivative of menadione or vitamin K3; or
(iii) a menadione or vitamin K3 derivative with low water solubility,
to induce resistance to the race *Fusarium odoratissimum* tropical race 4 (TR4) in plants.

Menadione or "vitamin K3" (2-methyl-1,4-naphthalenedione or 2-methyl-1,4-naphthoquinone), Merk index = 5714, CARN = [58-27-5] is an intermediate in the production of vitamin K. Menadione belongs to the class of fat-soluble vitamins, but there are many other derivatives of menadione, both water-soluble and fat-soluble. Menadiona is represented by formula I:

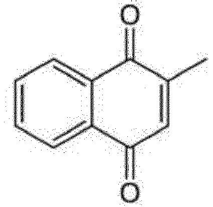

Some examples of water-soluble derivatives of menadione are sodium bisulfite, potassium bisulfite, ammonium bisulfite, calcium bisulfite and magnesium bisulfite, all encompassed within the scope of the present invention.

In a particular embodiment, the water-soluble derivative of menadione is bisulfite, preferably sodium bisulfite. Menadione sodium bisulfite or MSB, MI = 5716, CARN = [130-37-0], is a white crystalline, odorless, hygroscopic powder that is soluble in water.

The term "water solubility" refers to the measure of the amount of chemical substance that can dissolve in water at a specific temperature. In the present invention, the chemical substances are menadione derivatives. The unit of solubility is generally in mg/L (milligrams per liter) or ppm (parts per million). The term "derivatives with low water solubility" refers to menadione derivatives which are difficult to dissolve in water, i.e., those substances that have a water solubility of less than 100mg/L. In another particular embodiment, the menadione or vitamin K3 derivative with low water solubility is selected from the list consisting of: menadione nicotinamide bisulfite or MNB, menadione p-aminobenzoic acid bisulfite, menadione histidine bisulfite, menadione adenine bisulfite, menadione nicotinic acid bisulfite and menadione tryptophan bisulfite, preferably menadione nicotinamide bisulfite or MNB.

*Fusarium odoratissimum,* previously known as *Fusarium oxysporum f. sp. cubense* (Foc), comprises tropical race 4 (TR4), which is highly aggressive on Cavendish bananas as well as many other banana varieties. *Fusarium odoratissimum* is the causal agent of Fusarium wilt, also known as Panama disease, on Cavendish banana. Foc races are divided into vegetative compatibility groups (VCG's). Each VCG has an individual pattern of aggressiveness towards a number of banana cultivars. Currently, the most threatening Foc towards *Musa* species is VCG01213/16, also known as TR4.

Panama disease is a plant disease that infects banana plants (*Musa spp*.). The term "infection" or "infects" refers to the colonization of a host organism, for example, although without limiting, a plant, by pathogens, which in the context of the present invention is *F. odoratissimum* tropical race 4 (TR4), which invade the organism and multiply in it, producing toxic substances. The colonizing organism is detrimental to the normal functioning and survival of the host, so the agent is qualified as a pathogen or, in the context of the present invention, as a phytopathogen. The term "infection" includes both localized infections that affect a single area of the host organism, and generalized infections that affect the entire organism, and both symptomatic and asymptomatic infections.

Infection by *F. odoratissimum* TR4 triggers the self-defence mechanisms of the host plant, causing the secretion of a gel. This is followed by the formation of tylose in the vascular vessels which blocks the movement of water and nutrients to the upper parts of the plant. The tips of the feeder roots are the initial sites of infection which then moves on to the rhizome. The signs of the disease are most evident in the form of a dark stain where the stele joins the cortex. As the disease develops, large portions of the xylem turn a reddish-brown colour. Externally, a common initial symptom is the appearance of a faint pale yellow streak at the base of the petiole of the oldest leaf. This is followed by leaf chlorosis which progresses from lower to upper leaves, wilting of leaves and longitudinal splitting of their bases. As the disease progresses, younger leaves become affected, turn yellow and shrivel and the whole canopy begins to consist of dead or dying leaves. The external symptoms that characterize Panama disease of banana are:
- The yellow leaf syndrome, which refers to the yellowing of the border of the leaves which eventually leads to bending of the petiole.
- The green leaf syndrome, which occurs in certain cultivars, is characterised by the persistence of the green colour of the leaves followed by the bending of the petiole as in yellow leaf syndrome. Internally, the disease is characterized by a vascular discolouration. This begins in the roots and rhizomes with a yellowing that proceeds to a reddish-brown colour in the pseudostem, as the pathogen blocks the plant's transport of nutrients and water.
- With proceeding infection, the banana pseudostem can split, and eventually the whole plant collapses.

The composition of the invention can be found in any form of presentation suitable for administration or application, depending on the needs and components. Thus, it can be found, for example, although without limitation, in solid or liquid form. Liquid forms of presentation are suitable for spraying on soil, plant, or plant material, or for creating a solution in which plants or plant material are immersed. Alternatively, the compositions can be found in solid form by lyophilization and subsequent pelletisation of the same, which can be applied directly to the soil or resuspended in preferably aqueous solutions.

The composition can be administered, in an effective amount, to a plant, for example to the soil or plant material, including but not limited to seeds, leaves or fruits, optionally in combination with one or more antifungal agents that are simultaneously or sequentially administered.

In the present invention, the term "effective amount" refers to a sufficient quantity of the composition to enable the desired results to be obtained. Such effective amount can be administered in one go or in several administrations. The term "sufficient quantity" in the composition is enough to prevent, alleviate, improve, stabilize, reverse, delay or retard the effects of infections caused by *Fusarium odoratissimum* tropical race 4 (TR4).

The concentration of active components in the composition inducing resistance to *Fusarium odoratissimum* tropical race 4 (TR4) will depend on the type of plant, its development phase, as well as the frequency and manner of application of the composition. The efficacy of the active components of the composition that induce resistance to the *Fusarium odoratissimum* tropical race 4 (TR4), referred to Vitamin K3, MSB and MNB can be expected at the following concentrations: Vitamin K3 between 0.0001 and 200 ppm, MSB between 0.001 and 10000 ppm, MNB between 0.001 and 10000 ppm, preferably Vitamin K3 between 0.001 and 100 ppm, MSB between 0.01 and 5000 ppm, MNB between 0.01 and 5000 ppm. In a more preferred embodiment, the concentration of MSB is 80 ppm.

The mode of administration of the composition can be carried out, for example, but without limitation, by watering, spraying, coating, fumigation, impregnation, drenching, mixing with the substrate, immersion of the roots or other parts of the plant, including the whole plant in a solution comprising the composition of the invention.

In a particular embodiment, the composition is applied to the aerial part of the plant, preferably to the leaves or to the pseudostem of the plant.

The term "aerial" refers to everything that exists in the air or in the space above a solid surface. The aerial part of plants simply denotes the structures of a plant that are above ground, including but without limitation the stems, pseudostem, leaves, petioles, flowers and fruits.

The term "pseudostem" refers to the part of the banana plant that looks like a trunk. It is formed by the tightly packed overlapping leaf sheaths.

In another particular embodiment, the composition is applied by spraying. The term "spraying" refers to a method of delivering active components to plants by applying the composition directly to the aerial part of the plant.

The physiological principles of the transport of the compounds absorbed by the leaves by spraying are similar to those entering the plants by absorption via the roots, however, the movement of the compounds applied to the leaves is not the same in time and form as that from the roots to the rest of the plant. Foliar uptake is most effective when conditions for uptake from the soil are adverse such as drought, salt stress, extreme temperatures or other stresses. In addition, it is much easier to obtain a uniform distribution, in contrast to granular application or physical mixtures.

In another particular embodiment, the composition is applied to the soil, plant growth medium, plant root or plant seed.

The term "plant growth medium" refers to any medium for supporting plant growth and development, including but not limited to plant culture solutions. "Plant culture solution" refers to an aqueous solution containing oxygen and nutrients, which are completely dissociated in forms available to plants. Within these nutrients are essential elements and beneficial elements. This is a fundamental concept in fertigation and hydroponics. "Hydroponics" is a type of horticulture and a subset of hydroculture which involves growing plants, usually crops, without soil, by using mineral nutrient solutions in an aqueous solvent.

In another particular embodiment, the composition is applied to the soil, plant growth medium, plant root or plant seed by drenching, through the irrigation water, or by immersion of the plant root or the plant seed in the composition.

In another particular embodiment, the composition is applied to the whole plant by immersion.

The term "drenching" refers to a technique that is also used to introduce active components of one sort or another into plant roots, where they can be quickly taken up. The use of soil drenches allows quick delivery of the active components and avoids overspray and drift. Soil drenches are usually used to apply water-soluble chemicals which flood roots and are up-taken systemically to all parts of the plant.

The term "immersion" refers to a technique which comprises putting a part of the plant, preferably the root system of the plant or the seeds of the plant, in an aqueous solution that comprises active agents. In the present invention the solution comprises the composition of the invention.

The application of the composition by means of immersion of the root part of the plant as well as of seeds is carried out for a time and with a concentration that depends on the type of plant, stage of development as well as on the frequency and form of application of the composition. In the case of seeds that require a special treatment of scarification or elimination of certain covers to facilitate their germination, the process of immersion in the composition of the present invention can be carried out more effectively after the elimination of the covers to facilitate the absorption of the active compounds. Likewise, seeds can also be immersed at any stage of germination.

In another particular embodiment, the plants are of the *Musa* genus, preferably *Musa Cavendishii.*

The term "genus" refers to the category of biological classification (taxonomic category) that is located between the family and the species and that comprises one or more morphologically similar species related phylogenetically.

*Musa* is one of two or three genera in the family *Musaceae.* The genus includes flowering plants producing edible bananas and plantains. Around 70 species of *Musa* are known, with a broad variety of uses. Banana plants represent some of the largest herbaceous plants existing in the present, with some reaching up to 9 meters (30 ft) in height. The large herb is composed of a modified underground stem (rhizome), a false trunk or pseudostem, a network of roots, and a large flower spike. The false trunk is an aggregation of the basal portion of leaf sheathes; it is not until the plant is ready to flower that a true stem grows up through the sheath and droops back down towards the ground. At the end of this stem grows a peduncle with many female flowers protected by large purple-red bracts. The extension of the stem (this part called the rachis) continues growth downward where a terminal male flower grows.

The leaves originate from a pseudostem and unroll to show a leaf blade with two lamina halves.

Cavendishii bananas are the fruits of one of several banana cultivars belonging to the Cavendish subgroup. The same term is also used to describe the plants on which the bananas grow.

The composition of the invention can be used as such but, also, it can be mixed with various additives. In a particular embodiment, the composition is mixed with additives selected from the list consisting of organic and inorganic fertilizers, insecticides, nematicides, fungicides, bactericides and/or herbicides.

Another aspect of the present invention relates to a method for inducing resistance to *Fusarium odoratissimum* tropical race 4 (TR4) in plants (hereinafter "the method of the invention"), which comprises applying to the aerial part of the plant, to the soil, plant growth medium, plant root, plant seed or the whole plant, an effective amount of a composition comprising at least one of the following active components:
(i) menadione or vitamin K3;
(ii) a water-soluble derivative of menadione or vitamin K3; or
(iii) a menadione or vitamin K3 derivative with low water solubility.

In a particular embodiment, the water-soluble derivative of menadione or vitamin K3 is a bisulfite, preferably, sodium bisulfite.

The term "menadione sodium bisulfite" or "MSB" has been described or explained above, and this definition is applicable to the method of the invention.

In another particular embodiment, the menadione or vitamin K3 derivative with low water solubility is a bisulfite, preferably menadione nicotinamide bisulfite or MNB.

In another particular embodiment, the composition is applied to the aerial part of the plant, preferably to the leaves or the pseudostem, to the soil, plant growth medium, plant root, plant seed or the whole plant.

In another particular embodiment, the composition is applied by spraying, drenching, through the irrigation water or by immersion of a part of the plant or the whole plant in the composition.

In another particular embodiment, the composition is applied to the aerial part of the plant, preferably to the leaves or the pseudostem by spraying.

In another particular embodiment, the composition is applied to the soil, plant growth medium, plant root or plant seed by drenching, through the irrigation water, or by immersion of the plant root or the plant seed in the composition.

In another particular embodiment, the composition is applied to the whole plant by immersion.

The terms "aerial part", "pseudostem", "drenching", "immersion", "plant growth medium" and "spraying" have been defined or explained above, and these definitions are applicable to the method of the invention.

In another particular embodiment, the plants are from the *Musa* genus, preferably from the specie *Musa Cavendishii.*

The composition can be used as such but, also, it can be mixed with various additives. In a particular embodiment, the composition is mixed with additives selecting from the list consisting of organic and inorganic fertilizers, insecticides, nematicides, fungicides, bactericides and/or herbicides.

### DESCRIPTION OF THE DRAWINGS

**Fig. 1**. Representative corms during scoring.
**Fig. 2****.** Discolorations, as quantified, in the corm of the treated plants. Center lines show the medians; box limits indicate the 25^{th} and 75^{th} percentiles as determined by R software; whiskers extend 1.5 times the interquartile range from the 25^{th} and 75^{th} percentiles, outliers are represented by dots; crosses represent sample means; data points are plotted as open circles. n = 12 sample points for each batch (generated by boxplotR).

### Examples

Having now generally described the invention, the same will be more readily understood through reference to the following examples, which are provided by way of illustration and are not intended to be limiting of the present invention.

### Example

### 1.Material and methods

### 1.1. Menadione

Menadione sodium bisulfite (hereafter menadione) was obtained from Sigma-aldrich. Material was stored at -20°C until usage. Freshly generated batches of menadione were prepared just before every treatment with a concentration of 80 ppm and a pH between 5.5 and 6.

### 1.2._Plants and F. odoratissimum strain Tropical Race 4

This experiment was carried out in a glass greenhouse (standard conditions: 25°C, 70% humidity, 16 hours light/8 hours darkness) with banana plants from tissue culture of the cultivar Grand Naine (Subgroup Cavendish). Banana plants are planted in 1L pots.

*F. odoratissimum* strain Tropical Race 4 (TR4) was grown on Potato Dextrose Agar plates (PDA). For mycelium growth, plugs were obtained from the edges of freshly grown cultures (Ø 5mm). Conidia were grown as described (*García-Bastidas et al. 2019)* on Mung Bean medium. Upon growth, conidia were filtered over a Mesh filter to remove Mung Bean remnants and mycelium clumps.

### 1.3. Experimental setup

Plants were grown for around 9 weeks and then placed according to the developed random Latin squares design as shown in Table 1.

**Table 1. Latin squares design as randomly generated.**

| | Column | | |
|---|---|---|---|
| Row | 1 | 2 | 3 |
| 1 | Drench | Infection | Spray |
| 2 | Infection | Spray | Drench |
| 3 | Spray | Drench | Infection |

The treatments were: infection: only *F. odoratissimum* TR4; drench: drenching with menadione sodium bisulfite 250 mL and *F. odoratissimum* TR4 infection; spray: spraying with menadione sodium bisulfite solution in a concentration of 80 ppm (including 0.05% of tween20) on the leaves and pseudostem till runoff and *F*. *odoratissimum* TR4 infection. Controls were placed on a separate table in the same compartment to avoid cross-contamination. Each treatment consisted of 12 plants.

The TR4 spore concentration was 1E⁶ spores/mL and the amount applied was 200 mL.

Pre-treatments with menadione started 10 days before the *F. odoratissimum* TR4 infection. Drenching was performed every 10 days and spraying every 21 days thereafter with minor variation. In total 5 drenches and 3 sprays were performed before the scoring. All plants that were not drenched or sprayed with menadione solution, were treated similarly at the same time with water.

### 1.4._Scoring

Plants were scored by uprooting of the rhizome (corm) followed by cutting longitudinally. The detail pictures were analysed by ImageJ software, to determine the percentage of discoloration.

### 2. Results

Plants were checked regularly for yellowing and wilting due to *F. odoratissimum* TR4 infection at least once a week. For the control plants, only yellowing was observed at the lowest leaves due to natural aging of the plants. In contrast, several plants in trays challenged with *F. odoratissimum* TR4 conidia showed increased yellowing of the lower leaves, initial signs of TR4 infection. Next to yellowing and wilting, stunting of the developing leaves was observed and in a few cases the onset towards potential pseudostem splitting.

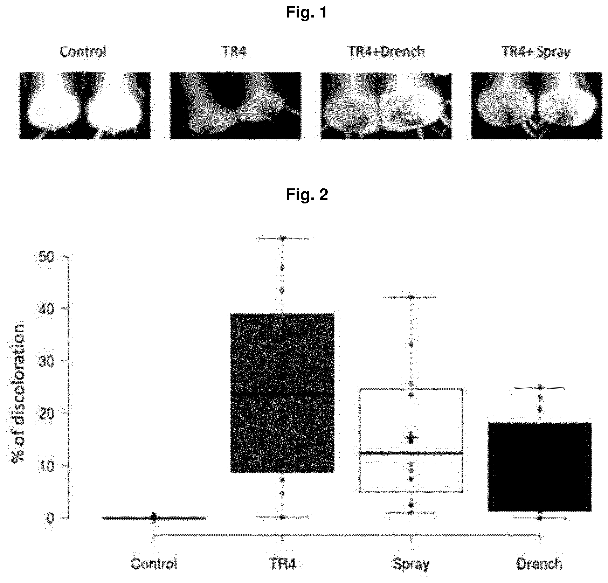

The scoring was performed nearly 6 weeks after infection. All plants were photographed internally (corm). A representative set is shown in Figure 1. The discoloration of the corm was quantified, and the overall data is presented in Figure 2.

Based on average, infection with TR4, resulted with higher discoloration levels as the menadione treatments (TR4: Spray: Drench = 25%: 15.6%: 11%) albeit with overlap of standard deviations (Figure 2). Notably, the three corms with the highest infection values were detected in the TR4 infected plants, which were not treated with menadione. Four out of five lowest values were derived from the drenched plants and the fifth was found in the sprayed plants.

Application of various statistical analysis methods steadily confirm that there is a significant effect between the control and all the treatments and that a significance difference is presence between infection and drench. The results obtained in this invention suggest that application of menadione, by spraying or drenching has a positive effect on the infection level with *F. odoratissimum* TR4.

## Claims

1. Use of a composition comprising at least one of the following active components:
(i) menadione or vitamin K3;
(ii) a water-soluble derivative of menadione or vitamin K3; or
(iii) a menadione or vitamin K3 derivative with low water solubility,
to induce resistance to *Fusarium odoratissimum* tropical race 4 (TR4) in plants.

2. Use of a composition according to claim 1, wherein the water-soluble derivative of menadione or vitamin K3 of (ii) is a bisulfite, preferably, sodium bisulfite.

3. Use of a composition according to any of claims 1 or 2, wherein the composition is applied to the aerial part of the plant, preferably to the leaves or to the pseudostem of the plant.

4. Use of a composition according to any one of claims 1 to 3, wherein the composition is applied by spraying.

5. Use of a composition according to any of claims 1 or 2, wherein the composition is applied to the soil, plant growth medium, plant root or plant seed.

6. Use of a composition according to claim 5, wherein the composition is applied by drenching, through the irrigation water, or by immersion of the plant root or the plant seed in the composition.

7. Use of a composition according to any of claims 1 or 2, wherein the composition is applied to the whole plant by immersion.

8. Use of a composition according to any one of claims 1 to 7, wherein the plants are from the *Musa* genus, preferably from the *Musa Cavendishii* species.

9. Use of a composition according to any one of claims 1 to 8, wherein the composition is mixed with additives selected form the list consisting of organic and inorganic fertilizers, insecticides, nematicides, fungicides, bactericides and /or herbicides.

10. A method for inducing resistance to *Fusarium odoratissimum* tropical race 4 (TR4) in plants, which comprises applying to the aerial part of the plant, the soil, plant growth medium, plant root, plant seed or the whole plant, an effective amount of a composition comprising at least one of the following active components:
(i) menadione or vitamin K3;
(ii) a water-soluble derivative of menadione or vitamin K3; or
(iii) a menadione or vitamin K3 derivative with low water solubility.

11. A method according to claim 10, wherein the water-soluble derivative of menadione or vitamin K3 of (ii) is a bisulfite, preferably, sodium bisulfite.

12. A method according to any of claims 10 or 11, wherein the composition is applied to the aerial part of the plant, preferably to the leaves or to the pseudostem of the plant, to the soil, plant growth medium, plant root, plant seed or the whole plant.

13. A method according to any one of claims 10 to 12, wherein the composition is applied by spraying, drenching, through the irrigation water, or by immersion of a part of the plant or the whole plant in the composition.

14. A method according to any one of claims 10 to 13, wherein the plants are from the *Musa* genus, preferably from the *Musa Cavendishii* species.

15. A method according to any one of claims 10 to 14, wherein the composition is mixed with additives selected from the list consisting of organic and inorganic fertilizers, insecticides, nematicides, fungicides, bactericides and/or herbicides.
